# EUROPÄISCHE PATENTANMELDUNG

(11) **EP 3 210 465 A1**
(43) Veröffentlichungstag der Anmeldung: **30.08.2017**
(21) Anmeldenummer: 16157234.2
(22) Anmeldetag: 24.02.2016
(51) Int. Cl.: A01K 21/00, A01K 23/00

(54) **HYGIENEVORRICHTUNG IN FORM EINER HOSE FÜR HEIM- UND NUTZTIERE**

(71) Anmelder: Goodbye S.A.R.L., 5465 Waldbredimus (LU)
(72) Erfinder: Buhre, Melanie, 5465 Waldbredimus (LU); Weinmann, Gerold, 57720 Volmunster (FR)
(74) Vertreter: Dr. Langfinger & Partner

(57) **Zusammenfassung**

Die vorliegende Erfindung betrifft eine Hygienevorrichtung (1) in Form einer Hose für Heim- und Nutztiere, insbesondere für Hündinnen, umfassend oder bestehend aus einer Hose, wobei die Hose einen Bund (3) aufweist, der eine Verbindungseinrichtung (5, 5´) umfasst, um zwei Bereiche des Bundes (3) lösbar miteinander zu verbinden, so dass die Hose einen offenen und einen geschlossen Zustand aufweist bzw. aufweisen kann, und wobei die Hose im geschlossenen Zustand an dem Tier sicher anordnenbar ist, und wobei die Hose eine erste und eine zweite Aussparung (9, 11) für die Hinterläufe des Tieres und eine dritte Aussparung (13) für die Rute des Tieres umfasst, wobei die zwei Aussparungen (11) für die Hinterläufe des Tieres jeweils einen geschlossenen und durch Elemente der Hose ausgebildeten Öffnungsrand aufweisen, und die dritte Aussparung (13) für Rute des Tieres im offenen Zustand der Hose in Richtung des Bundes (3) offen ist und nicht durch Elemente der Hose begrenzt ist, während die weiteren Elemente der Hose einen abschnittsweisen Öffnungsrand ausbilden, und im geschlossenen Zustand der Hose die besagte dritte Aussparung durch die zwei mittels der Verbindungseinrichtung (5, 5´) verbundenen Bereiche des Bundes (3) und/oder die Verbindungseinrichtung (5, 5´) begrenzt ist, in dem diese den Öffnungsrand der dritten Aussparung (13) komplettieren, sowie eine Verwendung einer solchen Hygienevorrichtung (1).

## Beschreibung

Die vorliegende Erfindung betrifft eine Hygienevorrichtung in Form einer Hose für Heim- und Nutztiere, insbesondere für Hündinnen.

Tierbesitzer, insbesondere Hundehalter eines Weibchens, sind mehrere Male im Jahr mit dem Problem des Östrusses oder des Eisprungs und den damit verbundenen Blutungen, die vorwiegend während des Proöstrusses und in etwas geringerer Form während des Östrusses auftreten, konfrontiert, wobei während der letzten Phase das Weibchen als fruchtbar und empfänglich gilt.

Aus dem Stand der Technik sind zahlreiche Vorrichtungen in Form von Hosen oder Höschen bekannt, die vor allem ihre Anwendung während der Ovulation des Tieres finden. Dabei sind die Hosen in der Regel als eine Art Windelhose mit oder ohne zusätzlichen Mitteln zur Aufnahme von Ausscheidungen, insbesondere in Form von Einlagen, ausgebildet.

Die bekannten Vorrichtungen haben sich zwar grundsätzlich in ihrer Funktion bewährt, stellen jedoch vorrangig das Hygienebedürfnis der Halter von Heim- und Nutztieren in den Vordergrund. Diese sind jedoch wenig geeignet, dem Tier ein möglichst natürliches und instinktives Verhalten zu ermöglichen.

Die bekannten Vorrichtung weisen in der Regel die Form eine konventionellen Unterhose auf, mit einer zusätzlichen Aussparung für die Rute des Tieres. Beispielsweise ist ein Anziehen und Lösen der bekannten Hosen für die Tiere unangenehm. Beim An- oder Ausziehen wird die Rute verdreht, damit diese durch die Aussparung in der Hose passt. Dies ist für das Tier nicht nur unangenehm, sondern kann, wenn nicht sorgfältig und vorsichtig ausgeführt, auch eine Rutenfraktur verursachen. Eine solche Rutenfraktur ist besonders schädlich, da diese in den meisten Fällen eine Rumpfamputation nach sich zieht.

Auch ist es nachteilig, dass die meisten bekannten Vorrichtungen als Einweg-Hosenvorrichtungen ausgebildet sind. Es sind somit reine Verbrauchsartikel, die Ressourcen belasten und für den Halter sehr kostenintensiv sind.

Hygienevorrichtung für Heim- und Nutztiere müssen mehrere Male am Tag für einen aufeinanderfolgenden Zeitraum von 15 bis 20 Tagen an- und ausgezogen werden, so dass die obigen Probleme regelmäßig auftreten.

Ebenfalls ist es nachteilig, dass die bekannten Vorrichtungen eng an den Körper des Tieres angepasst werden müssen, so dass die Ränder des Höschenbundes und die Öffnungen für die Beine eng sitzen und für die Tiere unangenehm zu tragen sind. In diesen Fällen versucht das Tier, die Vorrichtungen zu entfernen, in dem es an diesen beißt.

Die Aufgabe der vorliegenden Erfindung liegt nunmehr darin, die Nachteile des Stands der Technik zu überwinden und insbesondere eine Hygienevorrichtung für Heim- und Nutztiere zu liefern, die ein möglichst tiergerechtes Verhalten während der Ovulation des Tieres erlaubt, die einfach An- und Ausziehbar sind, die einen hohen Tragekomfort ermöglichen, und die wiederverwendbar sind.

Diese Aufgabe wird gelöst durch eine Hygienevorrichtung in Form einer Hose für Heim- und Nutztiere, insbesondere für Hündinnen, umfassend oder bestehend aus einer Hose, wobei die Hose einen Bund aufweist, der eine Verbindungseinrichtung umfasst, um zwei Bereiche des Bundes lösbar miteinander zu verbinden, so dass die Hose einen offenen und einen geschlossen Zustand aufweist bzw. aufweisen kann, und wobei die Hose im geschlossenen Zustand an dem Tier sicher anordnenbar ist, und wobei die Hose eine erste und eine zweite Aussparung für die Hinterläufe des Tieres und eine dritte Aussparung für die Rute des Tieres umfasst, wobei die zwei Aussparungen für die Hinterläufe des Tieres jeweils einen geschlossenen und durch Elemente der Hose ausgebildeten Öffnungsrand aufweisen, und die dritte Aussparung für Rute des Tieres im offenen Zustand der Hose in Richtung des Bundes offen ist und nicht durch Elemente der Hose begrenzt ist, während die weiteren Elemente der Hose einen abschnittsweisen Öffnungsrand ausbilden, und im geschlossenen Zustand der Hose die besagte dritte Aussparung durch die zwei mittels der Verbindungseinrichtung verbundenen Bereiche des Bundes und/oder die Verbindungseinrichtung begrenzt ist, in dem diese den Öffnungsrand der dritten Aussparung komplettieren.

Im Unterschied zu aus dem Stand der Technik bekannten Hygienevorrichtungen muss die Rute des Tieres bei der erfindungsgemäßen Hygieneeinrichtung nicht durch eine von einem Öffnungsrand vollständig umschlossene Aussparung geführt werden. Die erfindungsgemäße Hygieneeinrichtung kann dem Tier derart angezogen werden, dass zunächst die Beine durch die erste und die zweite Aussparung geführt werden und im Anschluss die Rute des Tieres durch die zum bundseitigen Ende im offenen Zustand nach oben offene dritte Aussparung beim Hochziehen der Hygienevorrichtung eingeführt werden. Dabei gleitet die Rute in die oben offene dritte Aussparung während des Hochziehens der erfindungsgemäßen Hygienevorrichtung und muss nicht durch eine von einem Öffnungsrand vollständig umschlossene Aussparung gemäß dem Stand der Technik vor dem Einführen der Beine mühsam eingeführt werden.

Erst wenn die Hygienevorrichtung angezogen ist, werden die zwei Bereiche des Bundes mittels der Verbindungseinrichtung verbunden, so dass die zwei Bereiche des Bundes und/oder die Verbindungseinrichtung eine Begrenzung der dritten Aussparung ausbilden und einen sicheren Halt der Hygienevorrichtung ermöglichen.

Beim Ausziehen ergeben sich die gleichen Vorteile. Die Verbindungseinrichtung wird gelöst und der Bund liegt nunmehr zweigeteilt vor. Die erfindungsgemäße Hygieneeinrichtung kann in diesem offenen Zustand einfach an den Beinen des Tieres heruntergezogen werden und die Rute gleitet aus der in diesem Zustand nach oben offenen dritten Aussparung heraus.

Im verschlossenen Zustand ähnelt die erfindungsgemäße Hygienevorrichtung mit ihren drei Aussparungen für die Beine und die Rute somit den bekannten Hygienevorrichtungen und bietet dieselbe Funktionalität, während im geöffneten Zustand aufgrund der erfindungsgemäßen Ausgestaltung der dritten Aussparung und des Bundes mit dem dazugehörigen Verbindungselement ein einfaches Anziehen und Ausziehen derselben ermöglicht wird.

Dabei kann vorgesehen sein, dass die erfindungsgemäße Verbindungseinrichtung lösbar mit der Hygienevorrichtung verbindbar oder verbunden ist, insbesondere Verbindungseinrichtungen unterschiedlicher Länge zur Größenanpassung der erfindungsgemäßen Hygieneeinrichtung zum Einsatz kommen können.

Dabei kann insbesondere vorgesehen sein, dass die Hygienevorrichtung einen oberen Teil zum abschnittsweise Bedecken des Rückens eines Tiers, einen unteren Teil zum abschnittsweise Bedecken eines Abdomens des Tiers sowie einen mittleren Teil zum Bedecken des Gesäß des Tieres umfasst, wobei die dritte Aussparung in dem oberen und/ oder mittleren Teil angeordnet ist.

Es kann sich dabei erfindungsgemäße auch als vorteilhaft erweisen, dass die Hygienevorrichtung aus einem elastischen und saugfähigem Material, insbesondere Naturfasern mit pflanzlichem Ursprung, insbesondere Baumwolle, Leinen und/oder Ramie, Naturfasern mit tierischem Ursprung, insbesondere Wolle und/oder Seide, Chemiefasern mit natürlichem Ursprung, insbesondere Viskose und/oder Modal, und/oder Chemiefasern mit synthetischem Ursprung, insbesondere Polyester, Polyacryl und/oder Elasthan, besteht und/oder dieses umfasst.

Es hat sich gezeigt, dass eine erfindungsgemäße Hygieneeinrichtung aus einem elastischen und saugfähigem Material zum Einen den Tragekomfort für die Tiere weiter erhöht, zum Anderen die Verwendung von Einlagen, insbesondere Hygienebinden, überflüssig werden lässt.

Die angeführten Materialien sind selbstverständlich beispielhaft zu verstehen, grundsätzlich ist es für einen Fachmann offensichtlich, dass eine Vielzahl von elastischen und saugfähigen Material einzeln oder in Kombination vorteilhaft seien können, um die gewünschte Funktionalität von erhöhtem Tragekomfort und Aufnahme von Ausscheiden bereitzustellen. Insbesondere ist es erfindungsgemäß vorteilhaft, wenn die Hygieneeinrichtung aus einem Material besteht oder dieses umfasst, dass eine maschinelle Reinigung ermöglicht.

Eine weiterer Vorteil der erfindungsgemäßen Hygieneeinrichtung liegt darin, dass diese wiederverwendbar ist, insbesondere ausgewaschen werden kann. Wie ausgeführt, ist ein regelmäßiger Wechsel der erfindungsgemäßen Hygieneeinrichtung notwendig, so dass die Hygienevorrichtung gegenüber aus dem Stand der Technik bekannten Hygienevorrichtungen deutlich ressourcensparender ist.

Auch kann es gemäß einer Ausführungsform der vorliegenden Erfindung vorteilhaft sein, dass der untere Teil mittels einer weiteren Verbindungseinrichtung mit dem Bund verbindbar oder verbunden ist, wobei die Verbindungseinrichtung insbesondere teilweise mit dem unteren Teil in einem ausgebildet ist, und wobei vorzugsweise der unteren Teil im verschlossenen Zustand bereichsweise um den Bund umgeschlagen vorliegt und mit diesem, vorzugsweise auf der Innenseite, mittels der weiteren Verbindungseinrichtung in unterschiedlichen Beabstandungen zum Öffnungsrand des Bundes fixierbar oder fixiert ist.

Eine solche erfindungsgemäße weitere Verbindungseinrichtung weist den Vorteil auf, dass mit einfachen Mitteln eine Anpassung der Länge der erfindungsgemäßen Hygieneeinrichtung erfolgen kann. Je nach Beabstandung des Befestigungspunkts der weiteren Verbindungseinrichtung vom Öffnungsrand des Bundes wird der untere Teil verlängert oder verkürzt. Somit kann die erfindungsgemäße Hygienevorrichtung an unterschiedliche Größen der Haus- oder Nutztiere angepasst werden.

Gemäß einer Ausführungsform der Erfindung kann vorgesehen sein, dass die dritte Aussparung in Form einer länglichen Aussparung ausgebildet ist und/oder sich von Richtung des Bundes über ein Viertel, ein Drittel und/oder die Hälfte des mittleren Teils erstreckt, insbesondere derart, dass die dritte Aussparung die Vulva eines Heim- oder Nutztiers nicht freilegt.

Durch eine solche Ausgestaltung der erfindungsgemäßen Vorrichtung wird sichergestellt, dass die dritte Aussparung in ihrem Durchmesser nicht zu groß ist, so dass die gewünschte Funktionalität der Aufnahme von Ausscheidungen erfolgen kann, wobei gleichsam ein einfaches Einführen der Rute in die dritte Aussparung erfolgen kann.

Unter einer länglichen Aussparung im Sinne der vorliegenden Erfindung soll eine Aussparung verstanden werden, deren Breite geringer ist als deren Länge, wobei eine längliche Aussparung insbesondere ein Verhältnis von Breite zu Länge von eins zu zwei, vorzugsweise von 1 zu 3, besonders bevorzugt von größer 1 zu 4 aufweist.

Auch kann es vorteilhaft sein, dass mindestens ein Rand, insbesondere alle Ränder, ein elastisches Band umfassen, insbesondere an den Öffnungsrändern der Aussparungen und des Bundes.

Durch ein solches elastisches Band wird ein enges Anliegen der erfindungsgemäßen Hygienevorrichtung am dem Heim- oder Nutztier ermöglicht, welches die sichere Aufnahme der Ausscheidungen ermöglicht, wobei gleichzeitig die Bewegungsfreiheit nicht eingeschränkt ist. Es hat sich dabei als besonders vorteilhaft erwiesen, wenn die erste, zweite und dritte Aussparung, letztere vorzugsweise ausschließlich unterhalb des Bundes, vollumfänglich von jeweils einem elastischen Band umfasst ist.

Weiterhin kann es gemäß einer Ausführungsform vorteilhaft sein, dass das untere und/ oder das mittlere Teil mit dem Bund oder das mittlere Teil mit dem oberen Teil mittels Verbindungselementen verbindbar oder verbunden ist, wobei die Verbindungselemente insbesondere längenveränderlich ausgebildet sind, so dass insbesondere eine Größenänderung der Hygienevorrichtung möglich ist.

Somit kann eine einfache Größenanpassung der erfindungsgemäßen Vorrichtung an unterschiedliche Tiere erfolgen.

Schließlich kann vorgesehen sein, dass mindestens eine der Verbindungseinrichtungen und/oder der Verbindungselemente in Form eines Reißverschlusses, eines Klettverschlusses, einer Druckknopfeinrichtung, eines Schnappverschlusses, Haken und Ösen, Schnürverschlüssen und/oder einer Knopfverbindung ausgebildet ist.

Es ist für den Fachmann offensichtlich, dass unterschiedliche Ausgestaltungen der Verbindungseinrichtungen und der Verbindungselemente vorteilhaft seien können. Es hat sich gezeigt, dass insbesondere Klettverschlüsse eine einfache und sichere Handhabung erlauben.

Auch liefert die Erfindung eine Verwendung einer erfindungsgemäßen Hygienevorrichtung als Hygieneartikel für Heim- und Nutztiere, insbesondere für Hündinnen. Besonders vorteilhaft kann dabei eine Verwendung der Hygienevorrichtung während des Proöstrusses, des Östrusses und/oder des Eisprungs eines Heim- oder Nutztieres, insbesondere einer Hündin, zur Aufnahme der damit verbundenen Blutungen, sein.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert wird, ohne dadurch die Erfindung zu beschränken.

Dabei zeigt:
- Figur 1:: eine schematische perspektivische Ansicht einer erfindungsgemäßen Hygienevorrichtung im geöffneten Zustand; und
- Figur 2:: eine schematische perspektivische Ansicht einer erfindungsgemäßen Hygienevorrichtung im von einem Hund getragenen und geschlossenen Zustand.

Die Figuren zeigen eine beispielhafte Ausführungsform eine Hygienevorrichtung 1 in Form einer Hose für Heim- und Nutztiere, insbesondere für Hündinnen, bestehend aus einer Hose.

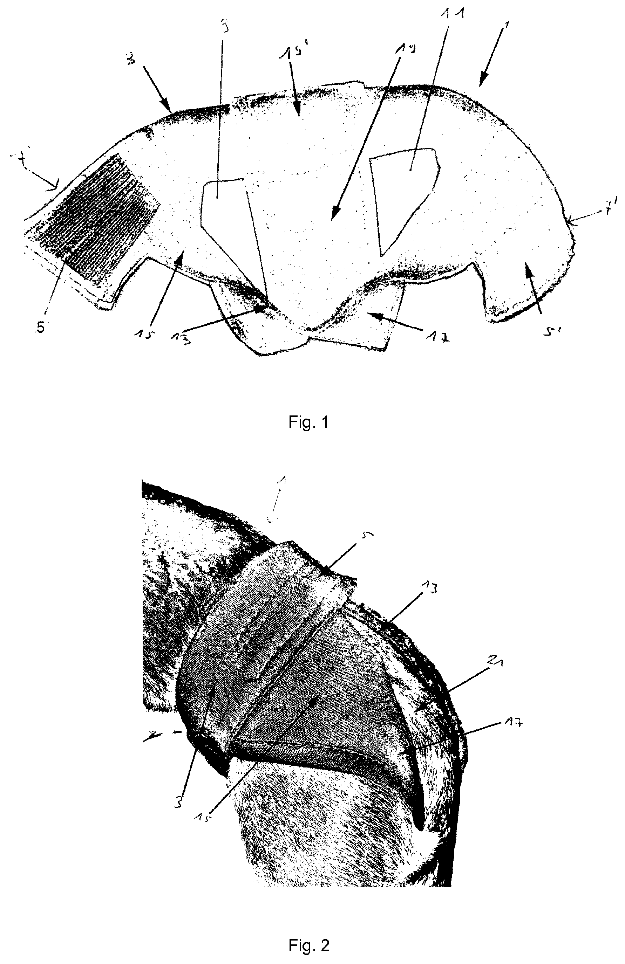

Figur 1 zeigt dabei die Hygienevorrichtung 1 im offenen Zustand. Die Hygienevorrichtung 1 weist einen Bund 3 auf, der eine Verbindungseinrichtung 5, 5' umfasst, um zwei Bereiche 7, 7' des Bundes 3 lösbar miteinander zu verbinden.

Die Hose weist eine erste Aussparung 9 und eine zweite Aussparung 11 für die Hinterläufe des Tieres auf. Eine längliche dritte Aussparung 13 ist für die Rute des Tieres vorgesehen.

Die zwei Aussparungen 9, 11 für die Hinterläufe des Tieres weisen jeweils einen geschlossenen und durch Elemente der Hose ausgebildeten Öffnungsrand auf. Die dritte Aussparung 13 für Rute des Tieres ist im offenen Zustand der Hose, wie in Figur 1 gezeigt, in Richtung des Bundes 3 offen und nicht durch Elemente der Hose begrenzt. Die weiteren Elemente der Hose bilden dabei einen abschnittsweisen Öffnungsrand aus.

Die Hygienevorrichtung 1 umfasst dabei, wie insbesondere in Figur 1 gezeigt, einen oberen Teil 15 zum abschnittsweise Bedecken des Rückens eines Tiers, einen unteren Teil 19 zum abschnittsweise Bedecken eines Abdomens des Tiers sowie einen mittleren Teil 17 zum Bedecken des Gesäß des Tieres. Die längliche dritte Aussparung 13 ist dabei in dem oberen und/oder mittleren Teil 15, 17 angeordnet ist, und ermöglicht ein Durchführen der Rute 21 einer Hündin, wie beispielsweise in Figur 2 gezeigt.

Des weiteren ist ersichtlich, dass der untere Teil 19 bereichsweise um den Bund 3 umgeschlagen vorliegt. Mittels einer nicht gezeigten weiteren Verbindungseinrichtung ist es möglich, die Beabstandung des umgeschlagenen Endes des unteren Teils 19 um den Bund 3 zu variieren, um eine Größenanpassung vorzunehmen.

Weiterhin zeigt Figur 2 die Hygieneeinrichtung 1 im geschlossenen Zustand der Hose, wobei die besagte dritte Aussparung 17 durch die zwei mittels der Verbindungseinrichtung 5,5' verbundenen Bereiche 7, 7' des Bundes 3 sowie die Verbindungseinrichtung 5, 5' begrenzt ist. Diese komplettieren nunmehr im geschlossenen Zustand den Öffnungsrand der dritten Aussparung 13, durch die die Rute 21 geführt ist.

Die in der voranstehenden Beschreibung, den Ansprüchen sowie den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Hygienevorrichtung in Form einer Hose für Heim- und Nutztiere, insbesondere für Hündinnen, umfassend oder bestehend aus einer Hose, wobei
die Hose einen Bund aufweist, der eine Verbindungseinrichtung umfasst, um zwei Bereiche des Bundes lösbar miteinander zu verbinden, so dass die Hose einen offenen und einen geschlossen Zustand aufweist bzw. aufweisen kann, und wobei die Hose im geschlossenen Zustand an dem Tier sicher anordnenbar ist, und wobei
die Hose eine erste und eine zweite Aussparung für die Hinterläufe des Tieres und eine dritte Aussparung für die Rute des Tieres umfasst, **dadurch gekennzeichnet, dass**
die zwei Aussparungen für die Hinterläufe des Tieres jeweils einen geschlossenen und durch Elemente der Hose ausgebildeten Öffnungsrand aufweisen, und
die dritte Aussparung für Rute des Tieres im offenen Zustand der Hose in Richtung des Bundes offen ist und nicht durch Elemente der Hose begrenzt ist, während die weiteren Elemente der Hose einen abschnittsweisen Öffnungsrand ausbilden, und im geschlossenen Zustand der Hose die besagte dritte Aussparung durch die zwei mittels der Verbindungseinrichtung verbundenen Bereiche des Bundes und/oder die Verbindungseinrichtung begrenzt ist, in dem diese den Öffnungsrand der dritten Aussparung komplettieren.

2. Hygienevorrichtung nach Anspruch 1, **dadurch gekennzeichnet, dass**
die Hygienevorrichtung einen oberen Teil zum abschnittsweise Bedecken des Rückens eines Tiers, einen unteren Teil zum abschnittsweise Bedecken eines Abdomens des Tiers sowie einen mittleren Teil zum Bedecken des Gesäß des Tieres umfasst, wobei die dritte Aussparung in dem oberen und/oder mittleren Teil angeordnet ist.

3. Hygienevorrichtung nach Anspruch 1 oder Anspruch 2, **dadurch gekennzeichnet, dass**
die Hygienevorrichtung aus einem elastischen und saugfähigem Material, insbesondere Naturfasern mit pflanzlichem Ursprung, insbesondere Baumwolle, Leinen und/oder Ramie, Naturfasern mit tierischem Ursprung, insbesondere Wolle und/oder Seide, Chemiefasern mit natürlichem Ursprung, insbesondere Viskose und/oder Modal, und/oder Chemiefasern mit synthetischem Ursprung, insbesondere Polyester, Polyacryl und/oder Elasthan, besteht und/oder dieses umfasst.

4. Hygienevorrichtung nach einem der vorangehenden Ansprüche, **dadurch gekennzeichnet, dass**
der untere Teil mittels einer weiteren Verbindungseinrichtung mit dem Bund verbindbar oder verbunden ist, wobei die Verbindungseinrichtung insbesondere teilweise mit dem unteren Teil in einem ausgebildet ist, und wobei vorzugsweise der unteren Teil im verschlossenen Zustand bereichsweise um den Bund umgeschlagen vorliegt und mit diesem, vorzugsweise auf der Innenseite, mittels der weiteren Verbindungseinrichtung in unterschiedlichen Beabstandungen zum Öffnungsrand des Bundes fixierbar oder fixiert ist.

5. Hygienevorrichtung nach einem der vorangehenden Ansprüche, **dadurch gekennzeichnet, dass**
die dritte Aussparung in Form einer länglichen Aussparung ausgebildet ist und/ oder sich von Richtung des Bundes über ein Viertel, ein Drittel und/oder die Hälfte des mittleren Teils erstreckt, insbesondere derart, dass die dritte Aussparung die Vulva eines Heim- oder Nutztiers nicht freilegt.

6. Hygienevorrichtung nach einem der vorangehenden Ansprüche, **dadurch gekennzeichnet, dass**
mindestens ein Rand, insbesondere alle Ränder, ein elastisches Band umfassen, insbesondere an den Öffnungsrändern der Aussparungen und des Bundes.

7. Hygienevorrichtung nach einem der vorangehenden Ansprüche, **dadurch gekennzeichnet, dass**
das untere und/oder das mittlere Teil mit dem Bund oder das mittlere Teil mit dem oberen Teil mittels Verbindungselementen verbindbar oder verbunden ist, wobei die Verbindungselemente insbesondere längenveränderlich ausgebildet sind, so dass insbesondere eine Größenänderung der Hygienevorrichtung möglich ist.

8. Hygienevorrichtung nach einem der vorangehenden Ansprüche, **dadurch gekennzeichnet, dass**
mindestens eine der Verbindungseinrichtungen und/oder eines der Verbindungselemente in Form eines Reißverschlusses, eines Klettverschlusses, einer Druckknopfeinrichtung, eines Schnappverschlusses, Haken und Ösen, Schnürverschlüssen und/oder einer Knopfverbindung ausgebildet ist.

9. Verwendung einer Hygienevorrichtung nach einem der vorangehenden Ansprüche als Hygieneartikel für Heim- und Nutztiere, insbesondere für Hündinnen.

10. Verwendung nach Anspruch 9, **gekennzeichnet durch**
eine Verwendung der Hygienevorrichtung während des Proöstrusses, des Östrusses und/oder des Eisprungs eines Heim- oder Nutztieres, insbesondere einer Hündin, zur Aufnahme der damit verbundenen Blutungen.
